# EUROPÄISCHE PATENTANMELDUNG

(11) **EP 3 275 770 A1**
(43) Veröffentlichungstag der Anmeldung: **31.01.2018**
(21) Anmeldenummer: 16181309.2
(22) Anmeldetag: 26.07.2016
(51) Int. Cl.: B62D 65/18

(54) **VORRICHTUNG ZUR ERKENNUNG DER GENAUEN POSITION UND LAGE EINES BAUTEILS IN EINER BEARBEITUNGSSTATION**

(71) Anmelder: SICK AG, 79183 Waldkirch (DE)
(72) Erfinder: HACK, André, 79104 Freiburg (DE)

(57) **Zusammenfassung**

Die Erfindung betrifft eine Vorrichtung zur Erkennung der genauen Position und Lage eines Bauteils in einer Roboterbearbeitungsstation und umfasst:
- ein Fördermittel zur Beförderung des Bauteils in die und aus der Roboterbearbeitungsstation,
- einen Roboter zur Bearbeitung des Bauteils an zu bearbeitenden Bereichen des Bauteils, wobei ein Bearbeitungsprogramm des Roboters so ausgebildet ist, dass es das Bauteil in einer definierten Referenz-Position und in einer definierten Referenz-Lage, die zusammen Referenz-Daten bilden, fehlerfrei bearbeiten kann,
- ein optisches Sensorsystem zur Erkennung der genauen Position des Bauteils im Raum und der Lage des Bauteils im Raum,
- wobei das Sensorsystem Bauteilmerkmale optisch erfasst,
- eine Auswerteeinheit, die so ausgebildet ist, dass sie Ist-Daten der Bauteilmerkmale, bestehend aus absoluter Ist-Position (x, y, z) und Ist-Lage, die durch Rollwinkel (ϕx), Nickwinkel (ϕy) und Gierwinkel (ϕz) definiert ist, ermittelt,
- und die Auswerteeinheit so ausgebildet ist, aus der Differenz der Ist-Daten zu den Referenz-Daten für die zu bearbeitenden Bereiche zumindest einen Verschiebungsvektor zu berechnen,
- und die Robotersteuerung so ausgebildet ist, dass unter Anwendung des oder der Verschiebungsvektoren das Bearbeitungsprogramm ablaufen kann.

## Beschreibung

Die Erfindung betrifft eine Vorrichtung zur Erkennung der genauen Position und Lage eines Bauteils in einer Roboterbearbeitungsstation und zur Bearbeitung des Bauteils.

Eine Automobilkarosserie wird im Gewerk des Karosseriebaus, auch "Rohbau" genannt, in mehreren Baustufen gefertigt. Hierbei werden Einzelteile primär über Fügeverfahren, wie z.B. Schweißen, Löten, Kleben oder Falzen, miteinander verbunden.

Der Fertigungsprozess erfolgt bei allen Automobilherstellern in vergleichbarer Form. Zunächst werden Baugruppen des Karosseriebodens (Bodengruppe, Unterbau) gefertigt. Typischerweise ist diese Baustufe in drei Bereiche aufgeteilt: Vorderer Boden (Front), Mittlerer Boden und Hinterer Boden. In einer Hauptstation des Karosseriebodenbaus kommen die drei beschriebenen Baugruppen zusammen und werden in einer geometriebildenden Fügestation, die mit komplexer mechanischer Spann- und Positioniertechnik ausgerüstet ist, verbunden. Hier beginnt die Hauptlinie eines Karosseriebaus. Vor diesem Beginn der Hauptlinie erfolgt die Zuführung von Bauteilen in die genannte Fügestation und der Weitertransport der zusammengebauten Teile vorwiegend mit Industrierobotern oder Werkern. Ab Beginn der Hauptlinie aber sind die Bauteile jedoch so groß und unhandlich, dass ein Transport mittels Roboter oder Werker nicht mehr in Frage kommt. Ab dieser Bearbeitungsstufe werden die Bauteile auf Werkstückträgern, sogenannte Skids, über Fördertechnik transportiert.

Im weiteren Produktionsverlauf der Hauptlinie werden am Karosserieboden weitere Fügeoperationen durchgeführt. Hier werden durch Industrieroboter oder Werker eine Vielzahl von Schweißnähten/-punkten (Festigkeit), Klebenähten (Festigkeit/Dichtheit) oder Bolzen (Funktion) gesetzt. Diese Stationen werden üblicherweise als Ausschweißstationen bezeichnet. In einer stark automatisierten Karosseriebaulinie befinden sich im Bereich des Karosseriebodens ca. 10 bis 15 dieser Ausschweißstationen.

Nach Abarbeitung aller Arbeiten in den Ausschweißstationen werden in weiteren geometriebildenden Fügestationen (je nach Hersteller 1 bis 3 Geometriestationen) die Seitenteile und das Dach an den Karosserieboden gefügt. Die Hauptstation dieses Prozesses wird auch als Framing oder Aufbau bezeichnet.

Im weiteren Produktionsverlauf werden an der nun weitgehend vollständigen Automobil-Karosserie weitere Fügeoperationen in Ausschweißstationen wie bereits beim Boden durchgeführt. In einer stark automatisierten Karosseriebaulinie befinden sich im Bereich des Aufbaus/Framings ca. 15 bis 30 dieser Ausschweißstationen.

In den Ausschweißstationen der Hauptlinie ist eine präzise Positionierung der Karosserie bzw. des Karosseriebodens erforderlich, um die Industrieroboter in die Lage zu versetzen, die Umfänge der Fügeoperationen automatisiert in wiederholgenauen Vorgängen umzusetzen. Hierfür werden technische Konzepte benötigt, um die auf dem Werkstückträger befindliche Karosserie in eine exakt definierte Position zu bringen.

In der Produktionstechnik der Hauptlinie im automatisierten Karosseriebau haben sich zwei Technologiekonzepte zur präzisen Positionierung der Karosserie bzw. des Karosseriebodens, im Folgenden nur Bauteil genannt, etabliert.

In einer ersten bekannten Lösung zur Positionierung des Bauteils befindet sich in jeder Station eine ortsfeste mechanische Technik, die üblicherweise aus Stiften, welche in Stiftaufnahmen des Bauteils eingreifen, in Kombination mit Spanntechnik besteht. Das Bauteil wird in diesem Konzept auf dem Werkstückträger über eine spezielle Fördertechnik (Skid auf Rollenbahn) von Station zu Station gefördert. Befindet sich der Werkstückträger in einer Ausschweißstation, wird der Werkstückträger durch die Fördertechnik grob positioniert (+/- 5mm) und das Bauteil auf die Stifte abgesenkt, die von den passgenauen Stiftaufnahmen aufgenommen werden. Durch Gravitationskraft und Spanntechnik in Verbindung mit den Passungen der Stiftaufnahmen für die Stifte des Bauteils wird die präzise Positionierung erreicht.

Nach dieser exakten Positionierung erfolgt die Abarbeitung der Fügeoperationen mittels wiederholgenauer Roboter nach absoluter Programmierung. Nach Beendigung der Roboterarbeiten in dieser Ausschweißstation wird das Bauteil von den Stiften nach oben abgehoben und weiter in die nachfolgende Station gefördert.

Diese mechanische Lösung ist z. B. in der DE 10 2008 020 077 A1 in Fig. 5 und 6 beschrieben. In diesem Dokument wird auch erwähnt, einen Lasertaster vorzusehen, mit dem die Position in Förderrichtung (x-Richtung) erkannt werden kann, um das Bauteil in x-Richtung durch Steuerung eines Antriebs exakt zu positionieren, für die weitere Bearbeitung mit einem Roboter. Aber für eine dreidimensionale Positionierung ist wieder die bekannte Lösung zur mechanischen Positionierung durch Absenken auf Stifte in den Fig. 5 und 6 offenbart. Insgesamt dient der Lasersensor somit dazu, das Bauteil in Förderrichtung an der richtigen Stelle anzuhalten.

Alternativ können in einer zweiten bekannten Lösung die Stiftaufnahmen auch in dem Werkstückträger angeordnet sein. Dann muss sichergestellt sein, dass z. B. durch Spanntechnik das Bauteil exakt und fest auf dem Werkstückträger positioniert ist. Das Bauteil wird dann indirekt über den Werkstückträger präzise positioniert.

Die mechanische Technik zur präzisen Positionierung des Bauteils oder des Werkstückträgers in jeder Station hat folgende Nachteile.

Zum einen bedeutet es einen hohen mechanischen Aufwand (Komplexität) der entsprechend kostenaufwändig ist. Für die mechanische Technik zur Positionierung (Stiftaufnahmen und Spanntechnik) sowie die Hebeanlage werden hochwertige Komponenten benötigt. Die Anschaffungskosten liegen bei ca. 50.000 EUR je Station.

Weiter bedeutet das Ausheben und Absenken, das senkrecht zur Förderrichtung erfolgt, einen hohen Zeitbedarf, währenddessen die Station nicht produktiv genutzt werden kann. Diese Zeit kommt zu der unproduktiven Zeit des Bauteiltransports hinzu.

Durch steigende Produktvielfalt (Karosserievarianten) in einer Fertigungslinie wird an die mechanische Technik der Positionierung eine hohe Anforderung der Flexibilität gestellt, da die Positionierung direkt über Stiftaufnahmen im Bauteil oder Werkstückträger erfolgt. Die Position der Stiftaufnahmen weicht insbesondere bei Modellen verschiedener Radstände voneinander ab. Diese Anforderung an Flexibilität führt zu hoher Komplexität der konstruktiven Ausführungen von Stiften und Stiftaufnahmen und Spanntechnik. Für jedes Modell müssen entsprechende Stifte, Stiftaufnahmen und Spanntechnik vorgesehen werden.

In der alternativen Version, wenn die Stiftaufnahmen im Werkstückträger integriert sind, kann zwar die Bauteilvarianz besser gehandhabt werden, aber die Werkstückträger sind deutlich teurer. Dies beinhaltet sowohl Erstinvestition als auch hohe laufende Kosten (insbesondere Wartung), da die Präzision der mechanischen Technik zur Positionierung ständig gewährleistet sein muss. Investitionskosten für einen solchen Werkstückträger übersteigen einen einfachen Werkstückträger um ca. 15.000 EUR.

Ausgehend von diesem Stand der Technik ist es Aufgabe der Erfindung, eine verbesserte Vorrichtung zur Erkennung der genauen Position und Lage eines Bauteils in einer Roboterbearbeitungsstation bereitzustellen, mit der die vorgenannten Nachteile vermieden werden können.

Diese Aufgabe wird gelöst mit einer Vorrichtung mit den Merkmalen des Anspruchs 1.

Die erfindungsgemäße Vorrichtung umfasst
- ein Fördermittel zur Beförderung des Bauteils in die und aus der Roboterbearbeitungsstation,
- zumindest einen Roboter zur Bearbeitung des Bauteils an zu bearbeitenden Bereichen des Bauteils, wobei ein Bearbeitungsprogramm des Roboters so ausgebildet ist, dass es das Bauteil in einer definierten Referenz-Position und in einer definierten Referenz-Lage, die zusammen Referenz-Daten bilden, fehlerfrei bearbeiten kann,
- ein optisches Sensorsystem zur Erkennung der genauen Position des Bauteils im Raum und der Lage des Bauteils im Raum,
- wobei das Sensorsystem Bauteilmerkmale optisch erfasst,
- eine Auswerteeinheit, die so ausgebildet ist, dass sie Ist-Daten der Bauteilmerkmale, bestehend aus absoluter Ist-Position (x, y, z) und Ist-Lage, die durch Rollwinkel (ϕx), Nickwinkel (ϕy) und Gierwinkel (ϕz) definiert ist, ermittelt,
- und die Auswerteeinheit so ausgebildet ist, aus der Differenz der Ist-Daten zu den Referenz-Daten für die zu bearbeitenden Bereiche zumindest einen Verschiebungsvektor zu berechnen,
- und die Robotersteuerung so ausgebildet ist, dass unter Anwendung des oder der Verschiebungsvektoren das Bearbeitungsprogramm ablaufen kann.

Die Erfindung ersetzt die eingangs beschriebenen mechanischen Technologiekonzepte zur präzisen Positionierung des Bauteils in Ausschweißstationen. Die erfindungsgemäße Vorrichtung ermöglicht die flexible Positions- und Lageerfassung des Bauteils auf dem Werkstückträger und versetzt den Industrieroboter in die Lage, die Umfänge der Fügeoperationen angepasst an die Position und Lage des Bauteils mit seinem im Prinzip unveränderten Bearbeitungsprogramm abzuarbeiten. Eine Anpassung an die jeweilige individuelle Position und Lage eines Bauteils erfolgt über die Erkennung mit dem Sensorsystem und Berechnung eines oder mehrerer Verschiebungsvektoren, die bei der Abarbeitung des Bearbeitungsprogramms des Roboters angewendet werden, z.B. im einfachsten Fall zu den Roboterkoordinaten addiert werden. Die erfindungsgemäße Vorrichtung hat somit den großen Vorteil, dass sie nahtlos in bestehende Robotersteuerungen eingebunden werden kann.

Wesentliche Vorteile sind eine Erhöhung der Produktivität durch Entfall des Absenkens und Aushebens der Werkstückträger mit dem Bauteil in einer Station und damit Einsparung von Durchlaufzeit des Bauteils in der Fertigung. Die gesteigerte Produktivzeit je Station kann letztendlich eine Einsparung von Produktionsfläche bewirken. Des Weiteren entfällt die aufwändige und platzgreifende Mechanik zur Positionierung und zum Heben und Senken, die durch vergleichsweise kleine optische Sensorik ersetzt wird, so dass dadurch eine Ausschweißstation weniger Produktionsfläche beansprucht.

Eine steigende Produktvielfalt ist problemlos handhabbar, denn für ein neues Bauteil muss lediglich das optische Sensorsystem neu eingelernt werden. Dadurch ist die Flexibilität gesteigert.

Insgesamt ist eine flexible Positions- und Lagebestimmung von Bauteilen in Ausschweißstationen bei gleichzeitiger Einsparung von direkten Kosten und Wartungsaufwand ermöglicht

In Weiterbildung der Erfindung ist das Sensorsystem auf das Koordinatensystem der Roboterbearbeitungsstation kalibriert, was die Anwendung des oder der Verschiebungsvektoren bei Ablauf des Bearbeitungsprogramms vereinfacht, denn dann ist keine Koordinatentransformation notwendig.

Wenn eine Bauteiltypenerkennungseinheit vorgesehen ist, können ohne weiteren Aufwand in einer Bearbeitungsstation verschiedene Bauteiltypen bearbeitet werden. Es muss lediglich softwaremäßig auf den jeweiligen Bauteiltyp umgestellt werden. Das Sensorsystem "weiß" dann, welche Bauteilmerkmale zu erkennen sind und wo deren Referenz-Position und Referenz-Lage ist, was selbstverständlich zuvor eingelernt gewesen sein muss. Und der Roboter "weiß" dann ebenso, welches Bearbeitungsprogramm für diesen Bauteiltyp vorgesehen ist.

Es können in Weiterbildung der Erfindung je nach Komplexität mehrere Verschiebungsvektoren bestimmt werden oder nur ein Gesamtverschiebungsvektor.

Aus Qualitäts- und Sicherheitsgründen kann vor Weitergabe der Verschiebungsvektoren an die Robotersteuerung eine Plausibilitätsprüfung durchgeführt werden.

Die Erfindung betrifft auch ein entsprechendes Verfahren zur Erkennung der genauen Position und Lage eines Bauteils in einer Roboterbearbeitungsstation und zur Bearbeitung des Bauteils. Diese Verfahren umfasst die Schritte:
- Fördern des Bauteils in die und aus der Roboterbearbeitungsstation mit einem Fördermittel,
- Bearbeiten des Bauteils an zu bearbeitenden Bereichen der Karosserie mit zumindest einem Roboter, wobei ein Bearbeitungsprogramm des Roboters so ausgebildet ist, dass es das Bauteil in einer definierten Referenz-Position und in einer definierten Referenz-Lage, die zusammen Referenz-Daten bilden, fehlerfrei bearbeiten kann,
- Erkennen der genauen Position des Bauteils im Raum und der Lage des Bauteils im Raum mit einem optischen Sensorsystem,
- wobei Bauteilmerkmale des Bauteils optisch erfasst werden,
- Ermitteln von Ist-Daten der Bauteilmerkmale, bestehend aus absoluter IstPosition (x, y, z) und Ist-Lage, die durch Rollwinkel (ϕx), Nickwinkel (ϕy) und Gierwinkel (ϕz) definiert ist, in einer Auswerteeinheit,
- Berechnen zumindest eines Verschiebungsvektors für die zu bearbeitenden Bereichen aus der Differenz der Ist-Daten zu den Referenz-Daten,
- Abarbeiten des Bearbeitungsprogramms unter Anwendung des oder der Verschiebungsvektoren.

Im Folgenden wird die Erfindung unter Bezugnahme auf die Zeichnung anhand eines Ausführungsbeispiels im Einzelnen erläutert. In der Zeichnung zeigen:

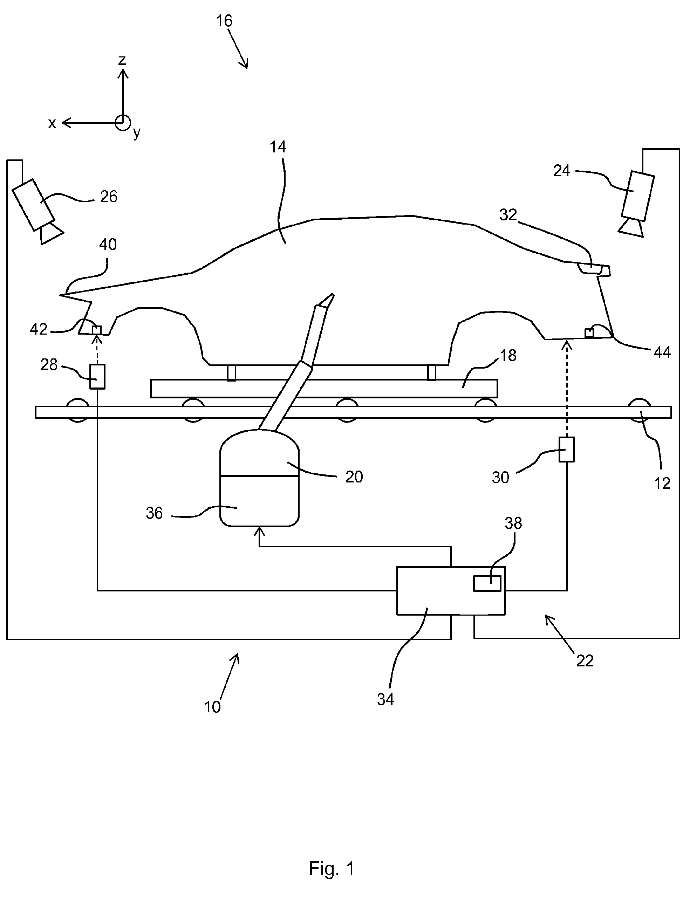

- Fig. 1: eine schematische Darstellung einer Ausschweißstation mit einem Bauteil, einem Roboter und einem optischen Sensorsystem.

Die erfindungsgemäße Vorrichtung 10 weist ein Fördermittel 12 zur Förderung eines Bauteils 14 in eine und aus einer Roboterbearbeitungsstation 16 heraus auf. Das Fördermittel 12 kann in bekannter Weise ausgestaltet sein und befördert üblicherweise Werkstückträger 18, sogenannte Skids, auf denen das Bauteil 14 montiert ist.

Ein Roboter 20 der Bearbeitungsstation 16 bearbeitet das Bauteil 14 an zur Bearbeitung vorgesehenen Bereichen des Bauteils 14 und wird dazu von einer Robotersteuerung 36 gesteuert. Dabei ist das Bearbeitungsprogramm des Roboters 20 so ausgebildet, dass es das Bauteil 14 in einer definierten Referenz-Position und in einer definierten Referenz-Lage, die zusammen Referenz-Daten bilden, fehlerfrei bearbeiten kann. Diese definierte Referenz-Position und Referenz-Lage werden der Vorrichtung 10 und damit auch dem Roboter 20 in einem Einlernprozess eingelernt (Teach-in).

Weiter weist die Vorrichtung 10 ein optisches Sensorsystem 22 auf, das zumindest einen Sensor, bevorzugt aber mehrere Sensoren 24, 26, 28, 30 aufweist. Das Sensorsystem 22 dient zur Erkennung der genauen Ist-Position des Bauteils 14 im Raum und der Ist-Lage des Bauteils 14 im Raum, wenn das Bauteil 14 sich in der Bearbeitungsstation befindet und bearbeitet werden soll. Die Ist-Position wird beispielsweise durch kartesische Koordinaten x, y, z und die Ist-Lage durch Rollwinkel ϕx, Nickwinkel ϕy und Gierwinkel ϕz definiert. Die Koordinaten und die Winkel bilden Ist-Daten des Bauteils 14. Wie später noch ersichtlich wird, ist das Koordinatensystem des Sensorsystems 22 auf das Koordinatensystem der Roboterbearbeitungsstation und damit des Roboters 20 kalibriert. Sensorsystem 22 und Roboter 20 arbeiten dann im gleichen Koordinatensystem.

Damit die dreidimensionalen Daten (Position und Lage) optisch erfasst werden können muss, wenn nur ein Sensor vorhanden wäre, dieser mehr als zwei Dimensionen erfassen. Dies kann beispielsweise durch eine 3-D Kamera 24 erfolgen. Wenn das Sensorsystem 22 mehrere Sensoren aufweist, können auch einfachere Sensoren eingesetzt werden. In dem in der Figur dargestellten Ausführungsbeispiel sind vier Sensoren 24, 26, 28 und 30 gezeigt, von denen zwei (24 und 26) als Kameras dargestellt sind (bevorzugt 3-D Kameras) und zwei (28 und 30) als Sensoren, die eine Lage eines definierten Merkmals (hier Unterkantenbereiche) des Bauteils 14 erfassen können.

Dabei erfasst das Sensorsystem 22 einzelne Bauteilmerkmale. Die Bauteilmerkmale sind charakteristische und definierte lokalisierbare Bereiche des Bauteils 14, z. B. Kanten 40, Löcher 32 oder auch sogenannte Hauptaufnahmen 42, 44, die an einem Bauteil in Vielzahl vorhanden sind. In dem dargestellten Ausführungsbeispiel erfasst die Kamera 26 (z. B. in 3D-Kameratechnologie) die Vorderkante 40 als Bauteilmerkmal und die Kamera 24 ein Loch 32 des Bauteils 14. Die Sensoren 28 und 30 können die Unterkante des Bauteils 14 oder auch eine Hauptaufnahme oder einen sonstigen definierten Bereich des Bauteils 14 erfassen. Weitere Sensoren mit 1D, 2D oder 3D Technologie können je nach Anforderung der Präzision zusätzlich zum Einsatz kommen, um weitere Merkmale des Bauteils 14 zu erfassen. Mit Hilfe der so erfassten Bauteilmerkmale kann die Ist-Position und die Ist-Lage in einer Auswerteeinheit 34 ermittelt werden.

In der Auswerteeinheit wurden auch in dem oben genannten Einlernprozess die Referenz-Daten eingelernt und erfasst. Weiter ist die Auswerteeinheit ausgebildet, die Differenzen der Ist-Daten zu den Referenz-Daten für Bereiche des Bauteils 14, die vom Roboter 20 zu bearbeiten sind, zu bestimmen. Aus diesen Differenzen werden zumindest ein oder mehrere Verschiebungsvektoren berechnet.

Dieser Verschiebungsvektor oder -vektoren werden an die Robotersteuerung 36 übermittelt. Unter Anwendung dieser Verschiebungsvektoren lässt sich nun das Bearbeitungsprogramm des Roboters 20 abarbeiten. Wenn sich das Bauteil 14 zufällig genau in der Referenz-Position und Referenz-Lage befindet, ist jeder Verschiebungsvektor gleich Null und die Bearbeitung kann ohne Korrekturen erfolgen. Wenn aber, was der Regelfall sein wird, die Ist-Position und/oder die Ist-Lage von den Referenz-Daten abweicht, kann genau dasselbe Bearbeitungsprogramm ablaufen, allerdings jetzt mit den zusätzlichen Korrekturen durch den oder die Verschiebungsvektoren.

Im Prinzip ist nur ein Gesamtverschiebungsvektor notwendig, da es immer nur ein Bauteil 14 gibt, das zu bearbeiten ist. Je nach Größe des Bauteils 14 kann es aber auch sinnvoll sein, einzelne Verschiebungsvektoren für einzelne Bauteilbereiche separat zu verrechnen, um Bauteiltoleranzen und Fehler durch große Längenunterschiede zu vermeiden. Somit wird der Verschiebungsvektor von dem Roboter 20 zur Anpassung an die aktuelle Position des Bauteils 14 genutzt, wobei insbesondere die Verschiebung aller Roboterkoordinaten oder die Verschiebung einzelner Roboterpfade oder nur die Verschiebung einzelner Schweißpunktkoordinaten in Betracht kommt.

In einer Ausführungsform kann eine Bauteiltypenerkennungseinheit 38 vorgesehen sein. Wenn es eine bestimmte Anzahl verschiedener Typen zur Bearbeitung gibt, kann die Bauteiltypenerkennungseinheit 38 den Typ erkennen und abhängig davon, das passende Bearbeitungsprogramm des Roboters 20 aktivieren und dem Sensorsystem 22 bzw. der Auswerteeinheit 34 "mitteilen", welcher Typ zur optischen Vermessung ansteht, damit das Sensorsystem "weiß", welche Bauteilmerkmale zu erkennen sind und wo deren Referenz-Position und Referenz-Lage ist, die zuvor eingelernt war, damit die korrekten Verschiebungsvektoren berechnet werden können. Die Bauteiltypenerkennungseinheit 38 kann eine separate Einheit sein, die beispielsweise mit RFID-Technik arbeitet und entsprechende RFID-Tags am Bauteil 14 ausliest. Die Bauteiltypenerkennungseinheit 38 könnte aber auch durch die Auswerteeinheit 34 und das Sensorsystem 22 gebildet sein, die optisch die unterschiedlichen Typen erkennt.

## Patentansprüche

1. Vorrichtung zur Erkennung der genauen Position und Lage eines Bauteils (14) in einer Roboterbearbeitungsstation (16) und zur Bearbeitung des Bauteils (14) mit
- einem Fördermittel (12) zur Beförderung des Bauteils (14) in die und aus der Roboterbearbeitungsstation (16),
- zumindest einem Roboter (20) zur Bearbeitung des Bauteils (14) an zu bearbeitenden Bereichen des Bauteils (14), wobei ein Bearbeitungsprogramm des Roboters (20) so ausgebildet ist, dass es das Bauteil (14) in einer definierten Referenz-Position und in einer definierten Referenz-Lage, die zusammen Referenz-Daten bilden, fehlerfrei bearbeiten kann,
- einem optischen Sensorsystem (22) zur Erkennung der genauen Position des Bauteils (14) im Raum und der Lage des Bauteils im Raum,
- wobei das Sensorsystem (22) Bauteilmerkmale (32, Unterkante, Spitze) optisch erfasst,
- und mit einer Auswerteeinheit (34), die so ausgebildet ist, dass sie Ist-Daten der Bauteilmerkmale (32), bestehend aus absoluter Ist-Position (x, y, z) und Ist-Lage, die durch Rollwinkel (ϕx), Nickwinkel (ϕy) und Gierwinkel (ϕz) definiert ist, ermittelt und
- die Auswerteeinheit (34) weiter ausgebildet ist, aus der Differenz der Ist-Daten zu den Referenz-Daten für die zu bearbeitenden Bereiche zumindest einen Verschiebungsvektor zu berechnen,
- und die Robotersteuerung (36) so ausgebildet ist, dass unter Anwendung des oder der Verschiebungsvektoren das Bearbeitungsprogramm ablaufen kann.

2. Vorrichtung nach Anspruch 1, **dadurch gekennzeichnet, dass** das Sensorsystem auf das Koordinatensystem der Roboterbearbeitungsstation kalibriert ist.

3. Vorrichtung nach einem der vorhergehenden Ansprüche, **dadurch gekennzeichnet, dass** eine Bauteiltypenerkennungseinheit vorgesehen ist und für jeden Bauteiltypen ein anderes Bearbeitungsprogramm vorgesehen ist.

4. Vorrichtung nach einem der vorhergehenden Ansprüche, **dadurch gekennzeichnet, dass** die Auswerteeinheit dazu ausgebildet ist, aus den Verschiebungsvektoren einen Gesamtverschiebungsvektor zu berechnen.

5. Vorrichtung nach einem der vorhergehenden Ansprüche, **dadurch gekennzeichnet, dass** die Verschiebungsvektoren auf Plausibilität überprüft werden.

6. Verfahren zur Erkennung der genauen Position und Lage eines Bauteils in einer Roboterbearbeitungsstation und zur Bearbeitung des Bauteils mit den Schritten:
- Fördern des Bauteils in die und aus der Roboterbearbeitungsstation mit einem Fördermittel,
- Bearbeiten des Bauteils an zu bearbeitenden Bereichen des Bauteils mit zumindest einem Roboter, wobei ein Bearbeitungsprogramm des Roboters so ausgebildet ist, dass es das Bauteil in einer definierten Referenz-Position und in einer definierten Referenz-Lage, die zusammen Referenz-Daten bilden, fehlerfrei bearbeiten kann,
- Erkennen der genauen Position des Bauteils im Raum und der Lage des Bauteils im Raum mit einem optischen Sensorsystem,
- wobei Bauteilmerkmale des Bauteils optisch erfasst werden,
- Ermitteln von Ist-Daten der Bauteilmerkmale, bestehend aus absoluter IstPosition (x, y, z) und Ist-Lage, die durch Rollwinkel (ϕx), Nickwinkel (ϕy) und Gierwinkel (ϕz) definiert ist, in einer Auswerteeinheit,
- Berechnen zumindest eines Verschiebungsvektors für die zu bearbeitenden Bereichen aus der Differenz der Ist-Daten zu den Referenz-Daten,
- Abarbeiten des Bearbeitungsprogramms unter Anwendung des oder der Verschiebungsvektoren.
